(19) Europäisches Patentamt
European Patent Office
Office européen des brevets

(11) **EP 1 908 665 B1**

(12) **FASCICULE DE BREVET EUROPEEN**

(45) Date de publication et mention de la délivrance du brevet:
**10.08.2011 Bulletin 2011/32**

(51) Int Cl.:
**B62D 6/00** (2006.01)

(21) Numéro de dépôt: **07301416.9**

(22) Date de dépôt: **28.09.2007**

(54) **Procédé de prévention de surbraquages et véhicule automobile équipé d'une direction assistée prévenant les surbraquages**

Verfahren zur Verhinderung von übermäßigem Einschlagen der Räder und Kraftfahrzeug, das mit einer Servolenkung ausgestattet ist, die ein übermäßiges Einschlagen verhindert

Method of preventing oversteering and automobile equipped with power-assisted steering preventing oversteering

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **03.10.2006 PCT/FR2006/008654**

(43) Date de publication de la demande:
**09.04.2008 Bulletin 2008/15**

(73) Titulaire: **PEUGEOT CITROËN AUTOMOBILES S.A.**
**78140 Vélizy Villacoublay (FR)**

(72) Inventeurs:
• **Nouillant, Cédric**
  **78220 Viroflay (FR)**
• **Pengov, Marco**
  **92500 Rueil Malmaison (FR)**
• **Golven, Guillaume**
  **92130 Issy les Moulineaux (FR)**

(56) Documents cités:
WO-A1-02/074607      DE-A1- 19 527 334
FR-A1- 2 813 576      US-A1- 2005 049 769

**Description**

La présente invention concerne un procédé de prévention de surbraquages au volant d'un véhicule automobile. Elle concerne également un véhicule automobile équipé d'une direction assistée prévenant les surbraquages.

De récentes études portant sur les causes d'accidents de la route montrent que souvent un accident se produit avec un seul véhicule où l'événement initiateur de l'accident est une erreur de trajectoire due à la faute du conducteur. Les systèmes de sécurité active tentent de corriger ces éventuelles erreurs de conduite propres au conducteur. C'est notamment le cas du système ABS qui évite le blocage des roues dans un freinage appuyé améliorant ainsi la distance de freinage et la maîtrise de la trajectoire du véhicule. Cela est également le cas du système ESP qui corrige la trajectoire par action de freinage différentielle en comparant les actions du conducteur, sur le volant et la pédale, au comportement du véhicule, au niveau de la vitesse de lacet et de l'accélération latérale.

Dans le cas d'un système ESP, on déduit une trajectoire désirée par le conducteur en se basant sur une mesure de la position du volant. Or il arrive dans bien des cas de panique, en situation accidentogène, que le conducteur exécute des actions au volant disproportionnées vis-à-vis du potentiel physique de son véhicule. Ainsi, il se peut que la trajectoire interprétée par ces actions au volant ne soit définitivement plus une référence adéquate à poursuivre.

Par exemple, le document US-2005/04769décrit un procédé de prévention de surbraquages correspondant au préambule des revendications 1 et 8 de la présente invention.

Un but de l'invention est notamment de prévenir une action exagérée d'un conducteur en situation de panique pouvant mener à un accident. A cet effet, l'invention a pour objet un procédé de prévention de surbraquages au volant d'un véhicule, notamment d'un véhicule automobile, équipé d'un système de direction assistée électrique pour orienter un train de roues directrices équipées de pneumatiques et reliées à une crémaillère dont le mouvement est résultant d'un effort $F_{crem}(t)$ lié au comportement des pneumatiques sous déformation, du couple appliqué par le volant appliqué par le volant et du couple d'assistance appliqué par un moteur électrique,un signal étant généré lorsque l'effort sur la crémaillère $F_{crem}(t)$ décroît par rapport à l'effort latéral $Fy_{av}(t)$ et la vitesse de rotation $\omega_{volant}$ du volant est supérieure à une vitesse de seuil donnée $\omega_{seuil}$ pendant une durée $\Delta t$ donnée.

Avantageusement :

- un résidu fonction du temps $r(t)$ est défini à partir de l'effort $F_{crem}(t)$ exercé sur la crémaillère et de l'effort latéral $Fy_{av}(t)$ exercé sur les pneumatiques des roues directrices selon la relation suivante :

$$r(t) = p.Fy_{av}(t) - F_{crem}(t) - r_0$$

où p est le paramètre de pente linéaire de la courbe caractéristique de $F_{crem}(t)$ en fonction de $Fy_{av}(t)$ dans sa zone linéaire et ro est l'ordonnée à l'origine, pour $Fy_{av} = 0$ ;

- un signal est généré lorsque le résidu $r(t)$ est supérieur à un seuil donné $r_{seuil}$ et la vitesse de rotation $\omega_{volant}$ du volant est supérieure à une vitesse de seuil donnée $\omega_{seuil}$ pendant la durée $\Delta t$ donnée.

Afin notamment de mieux exploiter les informations, par exemple,

- une information booléenne fonction du temps $s_r(t)$ est générée à partir du résidu $r(t)$ :

$$s_r(t) = 1 \text{ si } | r(t) | > r_{seuil} \text{ sinon } s_r(t) = 0 \text{ ;}$$

- une information booléenne fonction du temps $s_v(t)$ est générée à partir de la vitesse du volant $\omega_{volant}(t)$

$$s_v(t) = 1 \text{ si } | \omega_{volant}(t) | > \omega_{seuil} \text{ pendant la durée donnée } \Delta t,$$

$$\text{sinon } s_v(t) = 0$$

le signal étant généré lorsque le produit $s_r(t).s_v(t)$ est égal à 1.

Le signal est par exemple appliqué sur le moteur électrique sous forme d'un couple de freinage $C_p(t)$ limitant la rotation du volant. Le couple de freinage peut être $C_p(t) = -b \times (\omega_{volant}(t) - \omega_{seuil})$, b étant un coefficient de viscosité.

Le signal génère par exemple une action sur la pédale d'accélérateur du véhicule. De façon cumulative ou non, le signal peut être un signal d'alerte lumineux et/ou sonore.

L'invention a aussi pour objet un véhicule, notamment un véhicule automobile, équipé d'une direction assistée électrique pour orienter un train de roues directrices équipées de pneumatiques et reliées à une crémaillère dont le mouvement est commandé par un effort $F_{crem}(t)$ résultant du couple appliqué par le volant et du couple d'assistance appliqué par un moteur électrique de la direction assistée, l'effort $F_{crem}(t)$ exercé sur la crémaillère étant fonction croissante de l'effort latéral $Fy_{av}(t)$ exercé sur les pneumatiques des roues directrices puis décroissante, le système de direction assistée comporte un module créant un signal lorsque l'effort sur la crémaillère $F_{crem}(t)$ décroît par rapport à l'effort latéral $F_{av}(t)$ et que la vitesse de rotation $\omega_{volant}$ du volant est supérieure à une vitesse de seuil donnée $\omega_{seuil}$ pendant une durée $\Delta t$ donnée.

Avantageusement, le module définit un résidu fonction du temps $r(t)$ à partir de l'effort $F_{crem}(t)$ exercé sur la crémaillère et de l'effort latéral $Fy_{av}(t)$ exercé sur les pneumatiques des roues directrices (1) selon la relation suivante :

$$r(t) = p.Fy_{av}(t) - F_{crem}(t) - r_0$$

où p est le paramètre de pente linéaire de la courbe caractéristique de $F_{crem}(t)$ en fonction de $Fy_{av}(t)$ dans sa zone linéaire et ro est l'ordonnée à l'origine, pour $Fy_{av} = 0$ ;
le signal étant généré lorsque le résidu $r(t)$ est supérieur à un seuil donné $r_{seuil}$ et la vitesse de rotation $\omega_{volant}$ du volant (2) supérieure à une vitesse de seuil donnée $\omega_{seuil}$ pendant la durée $\Delta t$ donnée.

D'autres caractéristiques et avantages de l'invention apparaîtront à l'aide de la description qui suit faite en regard de dessins annexés qui représentent :

- la figure 1, par un schéma simplifié, les éléments d'une direction assistée reliant un volant aux roues directrices d'un véhicule;
- la figure 2, des courbes représentatives du couple d'auto-alignement et de l'effort latéral s'exerçant sur les pneumatiques des roues directrices ;
- la figure 3, des courbes caractéristiques donnant l'effort exercé sur la crémaillère de la direction assistée en fonction de l'effort latéral.

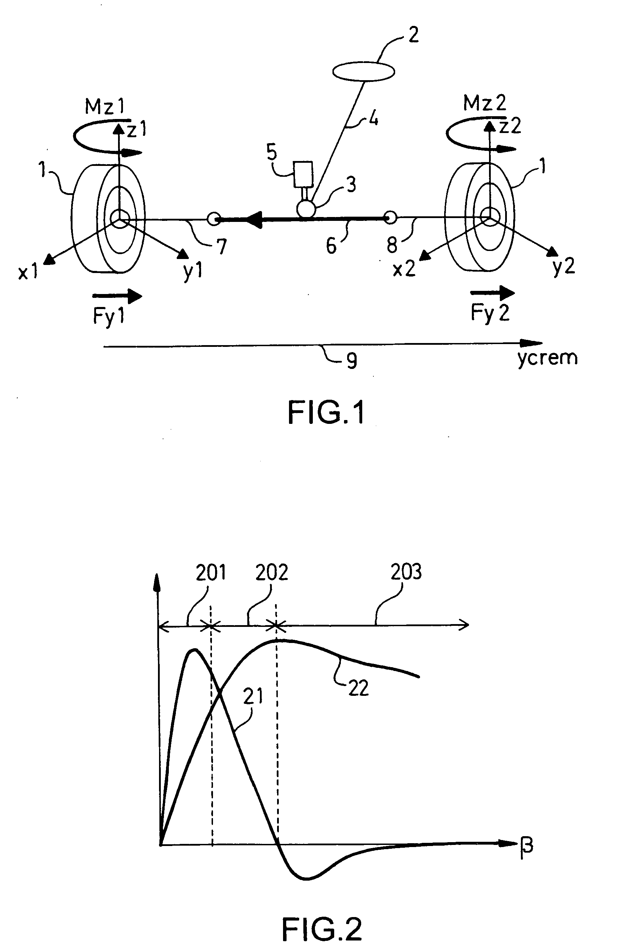

La figure 1 illustre, par un schéma, une direction assistée électrique équipant un véhicule automobile. Ce véhicule automobile comprend des roues avant 1, plus généralement des roues directrices, munies de pneumatiques et un système de direction assistée électriquement reliant un volant 2 à ces roues 1. Le volant 2 transmet à un pignon 3 son mouvement de rotation par l'intermédiaire d'une colonne 4. Le pignon 3 est par ailleurs activé en rotation par un moteur électrique 5 pour la direction assistée. Le pignon 3 coopère avec une crémaillère 6 pour lui transmettre un mouvement linéaire selon un axe 9. Une biellette 7, 8 relie chaque roue 1 à une extrémité de la crémaillère pour permettre la transformation de son mouvement linéaire en un mouvement de rotation appliqué aux roues autour d'un axe de pivot vertical z1, z2. Le système de direction comprend un dispositif d'assistance électrique dont seul le moteur 5 est représenté. Ce dispositif d'assistance comporte par exemple un capteur pour mesurer le couple exercé sur le volant, un calculateur recevant le couple mesuré par le capteur de couple et le moteur électrique 5. Le calculateur commande, via des interfaces appropriées, le moteur 5 qui applique ainsi un couple d'assistance sur le pignon 3.

La figure 2 illustre, par une première courbe 21, le couple d'auto-alignement d'un pneumatique d'une roue 1. Plus précisément, la courbe 21 présente le couple d'auto-alignement en fonction d'un angle $\beta$. Cet angle représente l'angle de dérive pneumatique ; c'est en fait l'angle que fait le pneu avec le vecteur vitesse au point de contact du pneu sur le sol. Il traduit le fait que le pneu n'est pas complètement dirigé dans sa direction de déplacement, représentée par le vecteur vitesse précité. Ce phénomène permet de déformer la gomme du pneu et de créer des efforts entre le pneu et le sol, ces efforts déplaçant alors le véhicule. Pratiquement, c'est le braquage des roues, donc le braquage au volant, qui permet de piloter cette dérive.

Ces efforts ne sont pas uniformément répartis. Il se crée alors un couple résultant Mz1, Mz2 autour de l'axe z1, z2 de pivot vertical du pneumatique comme l'illustre la figure 1. La plupart du temps, ce couple a tendance à faire revenir de manière élastique le pneu dans une zone de non-déformation, d'angle $\beta$ de dérive nul. C'est la raison pour laquelle ce couple peut être appelé couple d'auto-alignement. En d'autres termes, il s'agit du couple autour de l'axe z1, z2 généré par le pneu lui-même sous déformation.

Une deuxième courbe 22 illustre l'effort pneumatique latéral en fonction de l'angle $\beta$. Cet effort est la somme des efforts exercés sur la bande de roulement suivant l'axe y1, y2 du repère du pneu. La figure 1 illustre ce repère pour les deux roues 1 équipées de leur pneu. L'axe y1, y2 est parallèle à l'axe de la roue, il passe par son centre. Le repère x1, y1, z1 associé à la première roue forme un repère orthogonal direct. Il en est de même pour le repère x2, y2, z2 associé à la deuxième roue. Cet effort latéral Fy1, Fy2 permet au véhicule de tourner. L'effort Fx suivant l'axe x1, x2 permet au véhicule d'accélérer ou de freiner.

Les courbes 21, 22, représentative du couple d'auto-alignement et de l'effort latéral, traversent trois zones 201, 202, 203. Une première zone 201 montre que l'effort latéral Fy1, Fy2 et le couple d'auto-alignement Mz1, Mz2 croissent à peu près linéairement en fonction de l'angle de dérive β. Cela signifie que plus le conducteur braque, plus l'effort Fy1, Fy2 est important et plus le couple Mz1, Mz2 est important. Dans une deuxième zone 202, l'effort Fy1, Fy2 continue à augmenter alors que le couple Mz1, Mz2 décroît. Dans cette zone le véhicule peut encore tourner de manière plus importante car la valeur maximum de Fy1, Fy2 n'est pas encore atteinte. Cependant, le ressenti au volant dans la direction chute avec le couple Mz1, Mz2. Un conducteur expérimenté peut sentir au volant que le couple chute alors qu'il essaie de braquer et donc il peut arrêter de braquer davantage.

Dans une troisième zone 203, l'effort Fy1, Fy2 et le couple Mz1, Mz2 décroissent ensemble. Le potentiel du véhicule est alors dépassé, un effort latéral Fy1, Fy2 supplémentaire n'est pas atteignable, la zone 203 étant une zone de perte d'adhérence, et tout braquage supplémentaire dégrade l'effort Fy1, Fy2. Il faut toujours tenter de rester en dehors de cette zone 203. Avantageusement, l'invention permet à un conducteur non expert de rester en dehors de cette zone.

Pour prévenir tout risque de surbraquage au volant de la part du conducteur, il est nécessaire de vérifier en temps réel si le véhicule est proche de sa limite physique d'adhérence ; c'est-à-dire proche du passage à la troisième zone 203 précédente. Cette limite peut être estimée à l'aide de capteurs disponibles à bord du véhicule. A l'instar d'un pilote expert, l'invention exploite la chute du couple ressentie au volant lors de la limite d'adhérence du train avant formé des deux roues 1. Plus particulièrement, l'invention exploite les courbes de la figure 2 où l'on voit que lors d'une dérive importante, le couple d'auto-alignement 21 d'un pneumatique chute après être passé par un maximum, et en notant que cette chute se produit pour un angle de dérive β inférieure à celle faisant chuter l'effort latéral 22 responsable de la capacité de se diriger du véhicule. En pratique, un pilote expert peut ressentir au volant la limite d'adhérence des pneumatiques par la chute du couple d'auto-alignement avant que le véhicule ne soit effectivement à la limite de son potentiel physique.

Dans toute direction assistée, électrique ou autre, un bilan des efforts exercés sur la crémaillère de direction 6 peut être donné par la relation suivante :

$$m_{eq} \frac{d^2 y_{crem}(t)}{d^2 t} = F_{volant}(t) + F_{assistance}(t) - F_{crem}(t) \qquad (1)$$

où :

- $y_{crem}$ représente le déplacement de la crémaillère le long de l'axe 9 ;
- $F_{volant}$ l'effort volant venant du couple au volant, $C_{volant}$, imposé par le conducteur ;
- $F_{assistance}$ l'effort d'assistance venant du couple d'assistance, $C_{assistance}$, délivré par le moteur 5 ;
- $F_{crem}$ les efforts agissant sur la crémaillère, pour majeure partie les efforts Fy1, Fy2 et couples Mz1, Mz2 sur les pneumatiques transmis par le train avant ;
- $m_{eq}$ la masse équivalente de la crémaillère ramenée sur le pignon 3, correspondant à la somme de la masse de la crémaillère et de l'inertie du moteur 5 ramené au pignon dans le cadre de la direction assistée.

En régime stabilisé, c'est-à-dire en virage à vitesse constante, la relation (1) peut être simplifiée en considérant que :

$$F_{volant}(t) + F_{assistance}(t) = F_{crem}(t) \qquad (2)$$

Ainsi, en connaissant l'effort volant $F_{volant}$ et l'effort d'assistance $F_{assistance}$ délivré par le moteur, on peut estimer l'effort $F_{crem}$ dû principalement à la somme des couples d'auto-alignement Mz1, Mz2 des deux pneumatiques équipant les roues avant 1 qui coopèrent avec les biellettes de direction 7, 8. Néanmoins, l'équation (2) reste une simplification des phénomènes réels et il est avantageux de synthétiser un observateur dynamique prenant en compte les phénomènes dynamiques et non-linéaires intervenant dans le système de direction. Ainsi, pour obtenir l'effort $F_{crem}$ subi par la crémaillère, il est aussi possible d'utiliser une méthode d'observation à partir de variables connues comme la consigne d'une boucle d'asservissement où la commande de cette boucle est la variable observée. Cette boucle reçoit par exemple en entrée :

- la vitesse de rotation du moteur électrique 5 mesurée par le système de direction assistée électrique DAE ;
- la vitesse de rotation du volant mesurée par un capteur d'angle du volant, présent par exemple dans un système ESP ;
- le couple volant $C_{volant}$ mesuré par le dispositif de direction assistée DAE ;
- le couple du moteur électrique 5 estimé par son dispositif de commande à l'intérieur du système DAE.

La connaissance seule de l'effort $F_{crem}$ et donc principalement des couples Mz1, Mz2 ne permet pas à elle seule de quantifier le niveau d'adhérence disponible et donc la limite physique du véhicule. Il est ainsi nécessaire de connaître également les efforts latéraux Fy1, Fy2 du véhicule. L'effort latéral avant $Fy_{av}$ qui est la somme des efforts latéraux Fy1, Fy2 peut être obtenu par une méthode d'observation. Cette méthode utilise par exemple en entrée :

- l'accélération latérale du véhicule mesurée par un capteur, présent par exemple dans un système ESP ;
- la vitesse de lacet du véhicule mesurée par un capteur, présent par exemple dans un système ESP.

Les grandeurs $F_{crem}$ et $Fy_{av}$ peuvent être obtenues par d'autres méthodes ou mesures. Elles sont toujours déterminées en fonction du temps t, par exemple à partir de mesures ou d'observations échantillonnées. Grâce à ces deux grandeurs, il est alors possible de prédire la limite physique du potentiel du train avant.

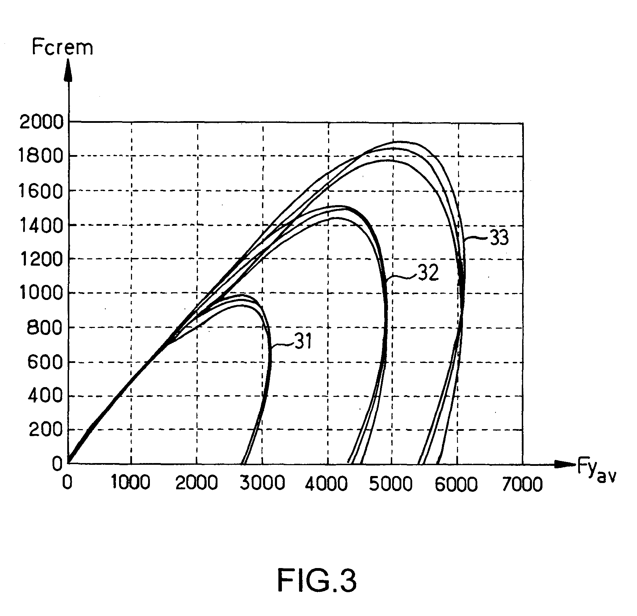

La figure 3 illustre l'évolution de l'effort sur la crémaillère $F_{crem}$ en fonction de l'effort latéral $Fy_{av}$ = Fy1 + Fy2 pour plusieurs conditions d'adhérence. Les grandeurs sont données en newtons. L'évolution de l'effort est illustrée par plusieurs courbes 31, 32, 33 (respectivement basse, moyenne et haute adhérence) représentative de la fonction $F_{crem}$ = f($Fy_{av}$), la fonction f étant par ailleurs paramétrée par les conditions d'adhérence. Comme le montre cette figure, l'effort crémaillère $F_{crem}$ croit linéairement en fonction de l'effort latéral au voisinage de l'origine avec une pente sensiblement identique quelque soit les conditions d'adhérence, puis décroît lorsque la limite physique est atteinte. Cette limite dépend des conditions d'adhérence. Les grandeurs $F_{crem}$ et $Fy_{av}$ décrivent donc bien le comportement du pneumatique décrit par la figure 2.

Une variable de résidu r(t) fonction du temps peut être définie. Cette variable traduit la déviation entre la partie linéaire des courbes 31, 32, 33, correspondant à la zone stable, et la partie non linéaire, correspondant à la zone non stable. Les grandeurs $F_{crem}$ et $Fy_{av}$ étant par ailleurs fonction du temps, r(t) est définie par la relation suivante :

$$r(t) = p.Fy_{av}(t) - F_{crem}(t) - r_0 \qquad\qquad (3)$$

où :

- p est le paramètre de pente linéaire identique pour les courbes 31, 32, 33 dans sa zone linéaire, c'est-à-dire que dans cette zone linéaire $F_{crem}$ est sensiblement égal à $p.Fy_{av}$;
- $r_0$ est l'ordonnée à l'origine, pour $Fy_{av}$ = 0.

p et $r_0$ sont choisis conformément au véhicule visé.

Ce résidu r(t) est alors une information pertinente sur la proximité de la limite d'adhérence du train avant.

Par suite, cette information est utilisée pour prévenir le surbraquage au volant. A cet effet, une information booléenne $s_r(t)$ est définie par la relation suivante :

$$s_r(t) = 1 \text{ si } |r(t)| > r_{seuil} \text{ sinon } s_r(t) = 0 \qquad\qquad (4)$$

Cette information est active quand le résidu r(t) dépasse un seuil $r_{seuil}$. Ce seuil défini la limite physique du train avant. En effet, il est atteint lorsqu'une courbe 31, 32, 33 entre dans sa zone non stable. Avantageusement, il est indépendant des conditions d'adhérence entre les roues et le sol comme la zone linéaire est identique pour l'ensemble des conditions d'adhérence.

En parallèle de cette première information booléenne $s_r(t)$, la vitesse de rotation du volant 2 peut être utilisée. Cette vitesse du volant $\omega_{volant}$ est représentative de l'état de panique du conducteur en situation critique. Une deuxième information booléenne $s_v(t)$ est ainsi définie :

$$s_v(t) = 1 \text{ si } |\omega_{volant}(t)| > \omega_{seuil} \text{ pendant une durée } \Delta t,$$
$$\text{sinon } s_v(t) = 0 \qquad (5)$$

Cette information est active si la vitesse du volant dépasse une vitesse de seuil $\omega_{seuil}$ pendant une durée donnée.
Une information booléenne globale s(t) peut être obtenue à partir des deux informations booléennes précédentes :

$$s(t) = s_r(t) \times s_v(t) \qquad (6)$$

Cette information est active lorsque les deux conditions précédentes, définies aux relations (4) et (5) sont réunies. Dans ce cas, la vitesse du volant est importante et la limite physique du train avant est atteinte. Cette information s(t) permet donc de décider quand prévenir le conducteur de la criticité de la situation de manière sûre et fiable. Plusieurs stratégies peuvent alors être envisagées :

- le conducteur peut être prévenu par un signal d'alerte, par exemple sonore ou lumineux, ou par tout autre type d'action pour l'inciter à modifier son comportement;
- le conducteur peut être prévenu de façon plus directe, par exemple :

    o par une action sur la direction pour l'inciter à ne pas surbraquer de façon intempestive son volant, cette action est appliquée par exemple par le moteur électrique 5 par une commande appropriée ;
    o par une action sur la pédale d'accélérateur pour inviter le conducteur à diminuer sa vitesse.

A titre d'exemple, les stratégies agissant sur la direction et sur l'accélérateur sont détaillées par la suite.
Comme le système de direction est un système de direction assistée électriquement, il est possible de piloter le couple du moteur 5. La stratégie est alors de freiner la vitesse de rotation du volant pour diminuer l'amplitude des mouvements du conducteur qui pénalisent le comportement du véhicule à la limite d'adhérence. A cet effet, un couple de freinage $C_p(t)$, par exemple de type visqueux, peut être appliqué uniquement lorsque l'information booléenne s(t) est active :

$$C_p(t) = -b \times (\omega_{volant}(t) - \omega_{seuil}) \qquad (7)$$

b étant un coefficient de viscosité.
Le couple total de consigne $C_{moteur}$ du moteur électrique 5 est alors défini par la relation suivante :

$$C_{moteur}(t) = C_{assistance}(t) + C_p(t) \qquad (8)$$

En ce qui concerne l'action sur la pédale d'accélérateur, celle-ci tend à diminuer la vitesse du véhicule. En effet, comme la situation accidentogène de surbraquage se produit souvent lors d'un virage à vitesse trop importante, il est intéressant d'inciter le conducteur à diminuer sa vitesse. Pour cela, on suppose qu'un système générateur d'effort à la pédale d'accélérateur est disponible. L'effort Fp(t) généré sur la pédale, appliqué uniquement lorsque s(t) est active, peut être alors défini par la relation suivante :

$$F_p(t) = F_{max} \times |\sin(k.r(t))| \qquad (9)$$

$F_{max}$ définit l'amplitude de l'effort. La fonction sinus, k étant un coefficient donné, permet de produire des vibrations de fréquence corrélées au résidu r(t), incitant le conducteur à relever le pied de la pédale d'accélérateur.
Les informations booléennes, le résidu ainsi que les consignes à appliquer sur les différents organes tels que le moteur ou la pédale d'accélération notamment, sont définies par un calculateur à partir d'informations fournies par des capteurs déjà disponibles embarqués dans le véhicule comme cela a été indiqué précédemment. Il n'est donc pas nécessaire d'installer des équipements ou composant supplémentaires sur le véhicule.

L'invention apporte notamment les avantages suivants :

- une prévention des actions de surbraquages au volant qui mènent souvent à des situations accidentogènes et auxquels les autres systèmes de sécurité active ne donnent que des réponses partielles ;
- une possibilité d'obtenir plusieurs stratégies de préventions ;

    o soit par alerte, sonore, visuelle ou autre ;
    o soit par action de la direction assistée ;
    o soit par action sur une pédale d'accélération ;

**Revendications**

1. Procédé de prévention de surbraquages au volant d'un véhicule, notamment d'un véhicule automobile, équipé d'un système de direction assistée électrique pour orienter un train de roues directrices (1) équipées de pneumatiques et reliées à une crémaillère (6) dont le mouvement est résultant d'un effort $F_{crem}(t)$ lié au comportement des pneumatiques sous déformation, du couple appliqué par le volant ($C_{volant}$) appliqué par le volant (2) et du couple d'assistance ($C_{assistance}$) appliqué par un moteur électrique (5), **caractérisé en ce que** un signal est généré lorsque l'effort sur la crémaillère $F_{crem}(t)$ décroît par rapport à l'effort latéral $Fy_{av}(t)$ et la vitesse de rotation $\omega_{volant}$ du volant (2) est supérieure à une vitesse de seuil donnée $\omega_{seuil}$ pendant une durée $\Delta t$ donnée.

2. Procédé selon la revendication 1, **caractérisé en ce que** :

   - un résidu fonction du temps r(t) est défini à partir de l'effort $F_{crem}(t)$ exercé sur la crémaillère et de l'effort latéral $Fy_{av}(t)$ exercé sur les pneumatiques des roues directrices (1) selon la relation suivante :

$$r(t) = p.Fy_{av}(t) - F_{crem}(t) - r_0$$

   où p est le paramètre de pente linéaire de la courbe caractéristique (31, 32, 33) de $F_{crem}(t)$ en fonction de $Fy_{av}(t)$ dans sa zone linéaire et $r_0$ est l'ordonnée à l'origine, pour $Fy_{av} = 0$ ;
   - un signal est généré lorsque le résidu r(t) est supérieur à un seuil donné $r_{seuil}$ et la vitesse de rotation $\omega_{volant}$ du volant (2) est supérieure à une vitesse de seuil donnée $\omega_{seuil}$ pendant la durée $\Delta t$ donnée.

3. Procédé selon la revendication 2, **caractérisé en ce que** :

   - une information booléenne fonction du temps $S_r(t)$ est générée à partir du résidu r(t) :

$$s_r(t) = 1 \text{ si } | r(t) | > r_{seuil} \text{ sinon } s_r(t) = 0 ;$$

   - une information booléenne fonction du temps $S_v(t)$ est générée à partir de la vitesse du volant $\omega_{volant}(t)$
   $S_v(t) = 1$ si $| \omega_{volant}(t) | > \omega_{seuil}$ pendant la durée donnée $\Delta t$,
   sinon $S_v(t) = 0$

   le signal étant généré lorsque le produit $S_r(t).S_v(t)$ est égal à 1.

4. Procédé selon l'une quelconque des revendications précédentes, **caractérisé en ce que** le signal est appliqué sur le moteur électrique (5) sous forme d'un couple de freinage $C_p(t)$ limitant la rotation du volant (2).

5. Procédé selon la revendication 4, **caractérisé en ce que** le couple de freinage est $C_p(t) = -b \times \omega_{volant}(t) - \omega_{seuil})$, b étant un coefficient de viscosité.

6. Procédé selon l'une quelconque des revendications précédentes, **caractérisé en ce que** le signal génère une action sur la pédale d'accélérateur du véhicule.

7. Procédé selon l'une quelconque des revendications précédentes, **caractérisé en ce que** le signal, est un signal d'alerte lumineux et/ou sonore.

8. Véhicule, notamment un véhicule automobile, équipé d'une direction assistée électrique pour orienter un train de roues directrices (1) équipées de pneumatiques et reliées à une crémaillère (6) dont le mouvement est commandé par un effort $F_{crem}(t)$ résultant du couple ($C_{volant}$) appliqué par le volant (2) et du couple d'assistance ($C_{assistance}$) appliqué par un moteur électrique (5) de la direction assistée, **caractérisé en ce que**, l'effort $F_{crem}(t)$ exercé sur la crémaillère étant fonction (31, 32, 33) croissante de l'effort latéral $Fy_{av}(t)$ exercé sur les pneumatiques des roues directrices (1) puis décroissante, le système de direction assistée comporte un module créant un signal lorsque l'effort sur la crémaillère $F_{crem}(t)$ décroît par rapport à l'effort latéral $F_{av}(t)$ et que la vitesse de rotation $\omega_{volant}$ du volant (2) est supérieure à une vitesse de seuil donnée $\omega_{seuil}$ pendant une durée $\Delta t$ donnée.

9. Véhicule automobile selon la revendication 9, **caractérisé en ce que** le module définit un résidu fonction du temps r(t) à partir de l'effort $F_{crem}(t)$ exercé sur la crémaillère et de l'effort latéral $Fy_{av}(t)$ exercé sur les pneumatiques des roues directrices (1) selon la relation suivante :

$$r(t) = p.Fy_{av}(t) - F_{crem}(t) - r_0$$

où p est le paramètre de pente linéaire de la courbe caractéristique (31, 32, 33) de $F_{crem}(t)$ en fonction de $Fy_{av}(t)$ dans sa zone linéaire et $r_0$ est l'ordonnée à l'origine, pour $Fy_{av} = 0$ ;
le signal étant généré lorsque le résidu r(t) est supérieur à un seuil donné $r_{seuil}$ et la vitesse de rotation $\omega_{volant}$ du volant (2) supérieure à une vitesse de seuil donnée $\omega_{seuil}$ pendant la durée $\Delta t$ donnée.

**Claims**

1. A method of preventing oversteering at the steering wheel of a vehicle, in particular of a motor vehicle, equipped with an electric power-assisted steering system for orientating a series of steering wheels (1) equipped with tyres and connected to a rack (6), the movement of which results from a force $F_{rack}(t)$ related to the behaviour of the tyres under deformation, from the torque ($C_{steering}$ wheel) applied by the steering wheel (2) and from the assistance torque ($C_{assistance}$) applied by an electric motor (5), **characterised in that** a signal is generated when the force on the rack $F_{rack}(t)$ decreases in relation to the lateral force $Fy_{av}(t)$ and the rotational speed $\omega_{steering}$ wheel of the steering wheel (2) is greater than a given threshold speed $\omega_{threshold}$ for a given period of time $\Delta t$.

2. The method according to claim 1, **characterised in that**:

   - a residual time function r(t) is defined based on the force $F_{rack}(t)$ exerted on the rack and the lateral force $Fy_{av}(t)$ exerted on the tyres of the steering wheels (1) according to the following relationship:

$$r(t) = p.Fy_{av}(t) - F_{rack}(t) - r_0$$

   where p is the parameter of linear gradient of the characteristic curve (31, 32, 33) of $F_{rack}(t)$ as a function of $Fy_{av}(t)$ in its linear zone and $r_0$ is the ordinate at the origin, for $Fy_{av} = 0$;
   - a signal is generated when the residual r(t) is greater than a given threshold $r_{threshold}$ and the rotational speed $\omega_{steering}$ wheel of the steering wheel (2) is greater than a given threshold speed $\omega_{threshold}$ for the given period of time $\Delta t$.

3. The method according to claim 2, **characterised in that**:

   - boolean time function information $S_r(t)$ is generated based on the residual r(t):

$$s_r(t) = 1 \text{ if } | r(t) | > r_{threshold} \text{ or else } s_r(t) = 0;$$

- boolean time function information $S_v(t)$ is generated based on the speed of the steering wheel $\omega_{steering}$ wheel(t)
$S_v(t) = 1$ If $| \omega_{steering}$ wheel (t) $| > \omega_{threshold}$ for the given period of time $\Delta t$,
or else $S_v(t) = 0$

the signal being generated when the product $S_r(t).S_v(t)$ is equal to 1.

4. The method according to any one of the preceding claims, **characterised in that** the signal is applied to the electric motor (5) in the form of a braking torque $C_p(t)$ limiting rotation of the steering wheel (2).

5. The method according to claim 4, **characterised in that** the braking torque is $C_p(t) = -b \times (\omega_{steering}$ wheel (t) $- \omega_{threshold})$, b being a coefficient of viscosity.

6. The method according to any one of the preceding claims, **characterised in that** the signal generates an action on the accelerator pedal of the vehicle.

7. The method according to any one of the preceding claims, **characterised in that** the signal is a light and/or sound warning signal.

8. A vehicle, in particular a motor vehicle, equipped with electric power-assisted steering for orientating a series of steering wheels (1) equipped with tyres and connected to a rack (6), the movement of which is controlled by a force $F_{rack}(t)$ resulting from the torque ($C_{steering}$ wheel) applied by the steering wheel (2) and from the assistance torque ($C_{assistance}$) applied by an electric motor (5) of the power-assisted steering, **characterised in that**, the force $F_{rack}$ (t) exerted on the rack being an increasing and then decreasing function (31, 32, 33) of the lateral force $Fy_{av}(t)$ exerted on the tyres of the steering wheels (1), the power-assisted steering system comprises a module which creates a signal when the force on the rack $F_{rack}(t)$ decreases in relation to the lateral force $F_{av}(t)$, and **in that** the rotational speed $\omega_{steering}$ wheel of the steering wheel (2) is greater than a given threshold speed $\omega_{threshold}$ for a given period of time $\Delta t$.

9. A motor vehicle according to claim 9, **characterised in that** the module defines a residual time function r(t) based on the force $F_{rack}(t)$ exerted on the rack and the lateral force $Fy_{av}(t)$ exerted on the tyres of the steering wheels (1) according to the following relationship:

$$r(t) = p.Fy_{av}(t) - F_{rack}(t) - r_0$$

where p is the parameter of linear gradient of the characteristic curve (31, 32, 33) of $F_{rack}(t)$ as a function of $Fy_{av}(t)$ in its linear zone and $r_0$ is the ordinate at the origin, for $Fy_{av} = 0$;
the signal being generated when the residual r(t) is greater than a given threshold $r_{threshold}$ and the rotational speed $\omega_{steering}$ wheel of the steering wheel (2) is greater than a given threshold speed $\omega_{threshold}$ for the given period of time $\Delta t$.

**Patentansprüche**

1. Verfahren zur Begrenzung des Lenkeinschlags am Lenkrad eines Fahrzeugs, insbesondere eines Kraftfahrzeugs, das mit einer elektronischen Servolenkung ausgestattet ist, um einen Satz lenkbarer Räder (1) zu lenken, die mit Reifen ausgerüstet und mit einer Zahnstange (6) verbunden sind, deren Bewegung aus einer Kraft $F_{crem}(t)$ abhängig vom Verhalten der Reifen unter Deformierung, aus dem vom Lenkrad aufgebrachten Drehmoment ($C_{volant}$), das vom Lenkrad (2) aufgebracht wird, und aus dem Hilfsdrehmoment ($C_{assistance}$), das von einem Elektromotor (5) aufgebracht wird, resultiert, **dadurch gekennzeichnet, dass** ein Signal erzeugt wird, sobald die auf die Zahnstange wirkende Kraft $F_{crem}(t)$ in Bezug auf die seitliche Kraft $Fy_{av}(t)$ abnimmt und die Drehgeschwindigkeit $\omega_{volant}$ des Lenkrads (2) während einer gegebenen Dauer $\Delta t$ größer ist als eine gegebene Schwellengeschwindigkeit $\omega_{seuil}$.

2. Verfahren nach Anspruch 1, **dadurch gekennzeichnet, dass**:

- ein Rest abhängig von der Zeit r(t) definiert wird, ausgehend von der Kraft $F_{crem}(t)$, die auf die Zahnstange ausgeübt wird, und von der seitlichen Kraft $Fy_{av}(t)$, die auf die Reifen der lenkbaren Räder (1) ausgeübt wird, entsprechend folgender Beziehung:

$$r(t) = p.Fy_{av}(t) - F_{crem}(t) - r_0$$

wobei p die lineare Steigung der Kennlinie (31, 32, 33) von $F_{crem}(t)$ als Funktion von $Fy_{av}(t)$ in deren linearem Bereich und $r_0$ die Ordinate zu Beginn ist, wenn $Fy_{av}(t) = 0$;
- ein Signal erzeugt wird, sobald der Rest r(t) größer als ein gegebener Schwellenwert $r_{seuil}$ ist und die Drehgeschwindigkeit $\omega_{volant}$ des Lenkrads (2) während einer gegebenen Dauer $\Delta t$ größer ist als eine gegebene Schwellengeschwindigkeit $\omega_{seuil}$.

3. Verfahren nach Anspruch 2, **dadurch gekennzeichnet, dass**:

- eine Boolesche Information abhängig von der Zeit $S_r(t)$ generiert wird, ausgehend vom Rest r(t):

$$s_r(t) = 1 \text{ wenn } | r(t) | > r_{seuil} \text{ sonst } s_r(t) = 0;$$

- eine Boolesche Information abhängig von der Zeit $S_v(t)$ generiert wird, ausgehend von der Geschwindigkeit des Lenkrads $\omega_{volant}$:

$$S_v(t) = 1 \text{ wenn } | \omega_{volant} | > \omega_{seuil} \text{ während der gegebenen Dauer } \Delta t, \text{ sonst } S_v(t) = 0;$$

wobei das Signal erzeugt wird, sobald das Produkt $S_r(t) . S_v(t)$ gleich 1 ist.

4. Verfahren nach einem der vorhergehenden Ansprüche, **dadurch gekennzeichnet, dass** das Signal in Form eines Bremsmoments $C_p(t)$, das die Drehung des Lenkrads (2) begrenzt, auf den Elektromotor (5) aufgebracht wird.

5. Verfahren nach Anspruch 4, **dadurch gekennzeichnet, dass** das Bremsmoment $C_p(t) = -b \times (\omega_{volant}(t) - \omega_{seuil})$ ist, wobei b ein Viskositätskoeffizient ist.

6. Verfahren nach einem der vorhergehenden Ansprüche, **dadurch gekennzeichnet, dass** das Signal eine Einwirkung auf das Gaspedal des Fahrzeugs auslöst.

7. Verfahren nach einem der vorhergehenden Ansprüche, **dadurch gekennzeichnet, dass** das Signal ein akustisches und/oder visuelles Warnsignal ist.

8. Fahrzeug, insbesondere ein Kraftfahrzeug, das mit einer elektronischen Servolenkung ausgestattet ist, um einen Satz lenkbarer Räder (1) zu lenken, die mit Reifen ausgerüstet und mit einer Zahnstange (6) verbunden sind, deren Bewegung von einer Kraft $F_{crem}(t)$ gesteuert wird, die aus dem Drehmoment ($C_{volant}$), das vom Lenkrad (2) aufgebracht wird, und aus dem Hilfsdrehmoment ($C_{assistance}$), das von einem Elektromotor (5) der Servolenkung aufgebracht wird, resultiert, **dadurch gekennzeichnet, dass**, wenn die Kraft $F_{crem}(t)$, die auf die Zahnstange wirkt, eine steigende Funktion (31, 32, 33) der seitlichen Kraft $Fy_{av}(t)$, die auf die Reifen der lenkbaren Räder (1) wirkt, und danach fallend ist, die Servolenkung ein Modul umfasst, das ein Signal erzeugt, sobald die Kraft $F_{crem}(t)$, die auf die Zahnstange wirkt, in Bezug auf die seitliche Kraft $Fy_{av}(t)$ abnimmt und sobald die Drehgeschwindigkeit $\omega_{volant}$ des Lenkrads (2) während einer gegebenen Dauer $\Delta t$ größer ist als eine gegebene Schwellengeschwindigkeit $\omega_{seuil}$.

9. Kraftfahrzeug nach Anspruch 9, **dadurch gekennzeichnet, dass** das Modul einen Rest definiert, der abhängig von der Zeit r(t) ist, ausgehend von der Kraft $F_{crem}(t)$, die auf die Zahnstange ausgeübt wird, und der seitlichen Kraft $Fy_{av}(t)$, die auf die Reifen der lenkbaren Räder (1) ausgeübt wird, entsprechend folgender Beziehung:

$$r(t) = p.Fy_{av}(t) - F_{crem}(t) - r_0$$

wobei p die lineare Steigung der Kennlinie (31, 32, 33) von $F_{crem}(t)$ als Funktion von $Fy_{av}(t)$ in deren linearem Bereich und $r_0$ die Ordinate zu Beginn ist, wenn $Fy_{av}(t) = 0$;
wobei das Signal erzeugt wird, sobald der Rest r(t) größer als ein gegebener Schwellenwert $r_{seuil}$ ist und die Drehgeschwindigkeit $\omega_{volant}$ des Lenkrads (2) während einer gegebenen Dauer $\Delta t$ größer ist als eine gegebene Schwel-

lengeschwindigkeit $\omega_{seuil}$.

FIG.1

FIG.2

FIG.3

**RÉFÉRENCES CITÉES DANS LA DESCRIPTION**

**Documents brevets cités dans la description**

- US 200504769 B